# EUROPÄISCHE PATENTANMELDUNG

(11) **EP 4 686 049 A1**
(43) Veröffentlichungstag der Anmeldung: **28.01.2026**
(21) Anmeldenummer: 24191043.9
(22) Anmeldetag: 26.07.2024
(51) Int. Cl.: H02K 5/10, H02K 5/15, H02K 5/124, H02K 7/00

(54) **AUSGESTALTUNG EINER ABTRIEBSSEITE EINER DYNAMOELEKTRISCHEN MASCHINE IN DER STERILEN VERFAHRENSTECHNIK**

(71) Anmelder: Siemens Aktiengesellschaft, 80333 München (DE)
(72) Erfinder: Sailer, Hermann, 85411 Hohenkammer (DE); Schöppach, Melanie, 97638 Mellrichstadt - Bahra (DE); Thometschek, Florian, 97720 Nüdlingen (DE); Voll, Miriam, 97657 Langenleiten (DE)
(74) Vertreter: Siemens Patent Attorneys

(57) **Zusammenfassung**

Die Erfindung betrifft eine Ausgestaltung einer Abtriebsseite (A-Seite) einer dynamoelektrischen Maschine (1) in der sterilen Verfahrenstechnik, insbesondere in der Lebensmittelindustrie mit zumindest einer dynamoelektrischen Maschine (1) und zumindest eines über eine Welle (5) der dynamoelektrischen Maschine (1) angetriebenen Abtriebselements auf der A-Seite der dynamoelektrischen Maschine (1),
wobei die Welle (5) um eine Achse (15) rotiert und in Lagern (12) gehalten ist,
wobei die A-Seite der dynamoelektrischen Maschine (1) zumindest einen Lagerflansch (13) und einen daran befestigten Übergangsflansch (2) aufweist, die in einem achsnahen Bauraum mittels Schraubverbindungen verbunden sind, wobei der Bauraum (16) mittels einer Hülse (7) und einem Wellendichtring (10) oder nur einem Wellendichtring (10) abgeschlossen ist,
wobei ein Anbauflansch (3) über Schraubverbindungen mit dem Übergangsflansch (2) verbunden ist, wobei die Schraubköpfe (8) dieser Schraubverbindungen zur dynamoelektrischen Maschine (1) weisen,
wobei am Endbereich der Welle (5) auf der A-Seite der dynamoelektrischen Maschine (1) das Abtriebselement gekoppelt ist.

## Beschreibung

Die Erfindung betrifft eine Ausgestaltung einer Abtriebsseite einer dynamoelektrischen Maschine in der sterilen Verfahrenstechnik, insbesondere in der Lebensmittelindustrie.

In der sterilen Verfahrenstechnik, u.a. der Lebensmittelindustrie, haben internationale oder nationale Kontrollbehörden Standards, u. a. für die Ausgestaltung des verwendeten Equipments erarbeitet. Beispielhaft sei hier auf die Standards der "American Society of Mechanical Engineers" (ASME), insbesondere auf den sog. "ASME Bioprocessing Equipment - Standard" (BPE), der "3-A Sanitary Standards Incorporation" (3-A), oder auch der "European Hygienic Design Group" (EHEDG) verwiesen. Die Standards gemäß ASME, BPE und 3A sind dabei insbesondere für den amerikanischen Raum relevant, während der Standard gemäß EHEDG insbesondere in Europa relevant ist. Typische Anforderungen an ein Bauteil durch zumindest einer der genannten Hygienebestimmungen betreffen insbesondere die Geometrie und/oder Oberfläche des jeweiligen Bauteils, welches derart beschaffen sein sollte, dass sich keine Ablagerungen bilden können und das jeweilige Bauteil einfach zu reinigen und/oder sterilisieren ist. Der Standard gemäß EHEDG schließt beispielsweise ferner scharfkantige Übergänge aus. Daher sollte beispielsweise ein Winkel zwischen zwei aneinander angrenzenden Flächen> 135 Grad, und/oder der Radius im Bereich des Überganges zweier Flächen> 3,2mm sein. Darüber hinaus wird eine Oberflächenrauhigkeit von < 0,78 micrometres gefordert.

Die EHEDG versteht dabei Reinigbarkeit als Voraussetzung für die Desinfektion von Bauteilen oder Anlagen um die Vermehrung von Mikroorganismen, die Kontamination durch Fremdkörper oder das Eindringen und der Befall von Schädlingen zu verhindern. Bei schwer zu reinigenden Produktionsanlagen können sich somit aufwändigere Reinigungs- und Dekontaminationsabläufe ergeben, die höhere Kosten verursachen. Es droht daher ein längerer Stillstand und/oder es müssen aggressivere, d.h. umweltbelastendere chemische Reinigungsmittel eingesetzt werden.

Alle Oberflächen, die direkt oder indirekt mit Lebensmitteln in Berührung kommen, müssen deshalb leicht zu reinigen sein. Bei der Reinigbarkeit dieser Oberflächen spielen diverse geometrische und oberflächliche Kriterien eine maßgebliche Rolle. So sollten beispielsweise raue Oberflächen vermieden werden, da sich dadurch die Reinigungszeit verlängert. Produktreste können sich in den Unregelmäßigkeiten der Oberflächen festsetzen. Dichtungen müssen so gestaltet sein, dass keine Produkt- oder Schmutzrückstände in Spalten hängen bleiben können. Ebenfalls sollten freiliegende Befestigungselemente, wie Schraubengewinde, Scharniere, Metall-Metall-Verbindungen, etc., vermieden werden.

Außerdem sollten alle Innenwinkel von 135° oder kleiner einen Mindestradius von 3 mm haben und scharfe Ecken sollten vermieden werden. Ein weiteres Kriterium ist die selbsttätige Entleerung u.a. der Geräte, z.B. Taschen, die durch Oberflächen mit einem Neigungswinkel von mindestens 3° gewährleistet werden, kann.

Die EHEDG führt u.a. folgende Eigenschaften auf, die der eingesetzte Werkstoff bei einer bestimmungsgemäßen Verwendung aufweisen muss:
Der eingesetzte Werkstoff soll inert gegenüber dem Produkt und gegenüber Reinigungs- und Desinfektionsmitteln sein. Außerdem soll er korrosionsbeständig, ungiftig, nicht-haftend und mechanisch stabil sein.

Neben Elastomeren, Kleb- und Dichtstoffen, Schmierstoffen, Signalübertragungsflüssigkeiten und Wärmedämmstoffe zählt die EHEDG damit auch Kunststoffe als mögliche und in manchen Fällen bessere Alternative zu Edelstahl auf. Insbesondere bei Anwendungen, bei denen geringes Gewicht, eine hohe Verschleißfestigkeit oder eine höhere Chemikalienbeständigkeit als bei Edelstahl gefragt sind, kommen Komponenten aus Kunststoff in Frage.

Natürlich unterliegt auch lebensmittelechter Kunststoff strengen gesetzlichen Auflagen u.a. von der EU-Verordnung 10/2011 oder FDA. Die Kriterien für den Lebensmittelkontakt von Kunststoff reichen von Temperatur- und Reinigungsfähigkeit hin zur Hydrophobizität. Hydrophobizität beschreibt das "wassermeidende" Verhalten von Oberflächen.

Besonders im Bereich für Food & Beverage, also der Lebensmitteltechnik gibt es aktuell keine technische Lösung für eine EHEDG (European Hygienic Engineering and Design Group) konforme Abdichtung eines Motorflansches oder Getriebeflansches. Diese EHEDG Anforderungen werden vor allem bisher bei der Abdichtung zwischen einer Antriebswelle und z.B. einer Riemenscheibe - also auf der A-Seite eines Motors oder Getriebes- nicht erfüllt. Dies bedeutet, dass kein Lebensmittel mit dieser Motor A-Seite, sowie dem Wellenaustritt in Berührung kommen darf, da sich diese Abtriebselemente bzw. Anbauten, wie z.B. Riemenscheiben nicht korrekt reinigen lassen.

Des Weiteren sind vor allem auch Gewinde - mit oder ohne Schraubeinsatz - schwer zu reinigen und insofern für die Lebensmittelindustrie nicht geeignet oder sogar nicht zugelassen.

Die A-Seite der dynamoelektrischen Maschine also z.B. eines Motors darf nicht in Kontakt mit dem Lebensmittel kommen, da sich die Bauteile, wie eine Welle und ein wie immer gearteter Kundenanbau nicht EHEDG-konform reinigen lassen. Deshalb musste bisher die Abtriebsseite des Motors, also die A-Seite des Motors ein EHEDG-konformes Getriebe oder eine Kupplungslaterne aufweisen, um diese Forderungen zu erfüllen.

Dabei deckt diese Kupplungslaterne die "nicht EHEDG-konform-reinigbaren" Komponenten ab. Diese Kupplungslaterne muss ebenfalls aus Edelstahl z.B. 1.4404 bestehen und darf eine Rauheit von Ra 0,8 nicht überschreiten. Dies wiederum macht eine solche Abdichtung teuer. Weiterhin nimmt ein solcher Anbau auf der A-Seite des Motors einen vergleichsweise großen axialen Bauraum ein, der die Gestaltungsmöglichkeiten der Abtriebsseite einschränkt.

Ausgehend davon liegt der Erfindung die Aufgabe zugrunde Ausgestaltung einer Abtriebsseite einer dynamoelektrischen Maschine in der sterilen Verfahrenstechnik, insbesondere in der Lebensmittelindustrie derart zu gestalten, diese EHEDG-konform ausgeführt ist und die Gestaltungsmöglichkeiten der Abtriebsseite nicht einschränkt.

Die Lösung der gestellten Aufgabe gelingt durch die Merkmale der unabhängigen Ansprüche.

Vorteilhafte Ausgestaltungen sind den abhängigen Ansprüchen und/oder der Beschreibung zu entnehmen.

Bei einer dynamoelektrischen Maschine, wie einem Motor gibt es eine A-Seite (Abtriebsseite), deren eines Wellenende zu Wellenanbauelementen, wie Abtriebselementen und/oder einer Arbeitsmaschine weist und mit dieser Arbeitsmaschine mechanisch gekoppelt wird. Die B-Seite des Motors liegt am anderen Wellenende und ist den Wellenanbauelementen abgewandt.

Als A-seitiges Abtriebselement des Motors, wird erfindungsgemäß eine Riemenscheibe, eine Kupplung, oder ein Zahnrad verstanden. Als Arbeitsmaschine wird z.B. eine Pumpe oder ein Verdichter bezeichnet.

Erfindungsgemäß wird nun die Abtriebsseite der dynamoelektrischen Maschinen derart ausgestaltet, dass EHEDG-konforme Flachdichtungen z.B. aus Silikon oder EPDM alle relevanten Kontaktflächen abdichten. Weiterhin wird die auf der A-Seite befindliche Wellenbohrung mit einer EHEDG-konformen Edelstahlschrauben sowie einer Edelstahlscheibe abgedichtet. Der EHEDG Wellendichtring aus PTFE läuft auf einer Edelstahlhülse z.B. aus 1.4404 mit einer Rauheit von < Rₐ 0,8.

Die erfindungsgemäß eingesetzten EPDM-Dichtungen sind aus Ethylen-Propylen-Dien-Kautschuk (Ethylen-Propylen-Dien; M-Gruppe) mit Terpolymere aus Ethylen, Propylen und einem nicht näher festgelegten Dien.

Diese verwendeten EPDM-Dichtungen weisen eine vergleichsweise gute chemische Beständigkeit im Kontakt mit Wasser/Wasserdampf, Kühlflüssigkeiten sowie Säuren und Laugen auf.

Allgemein ist EPDM langfristig alterungsbeständig, resistent gegen UV-Strahlung und Ozon, witterungsbeständig, robust, begehbar, thermisch beständig und frostsicher sowie einfach und im Gebäudebereich brandsicher zu verarbeiten.

EPDM gilt bekanntermaßen als Material, das bei der Herstellung, Verarbeitung und Nutzung nur in geringem Maße belastend auf die Umwelt einwirkt. Es enthält keine flüchtigen Weichmacher oder Schadstoffe, die über die Nutzungsdauer freigesetzt werden können. Das Material kann wiederaufbereitet und z.B. für Bodenbeläge eingesetzt oder sogar verbrannt werden.

Der insbesondere kundenseitige Anbauflansch ist dabei so gestaltet, dass die Reinigung der Motorflanschflächen und der Wellenanbauelemente einfach möglich ist. Dabei sind möglichst große Fasen sowie möglichst große Radien an dem Anbauflansch vorgesehen.

Dabei wird als Fase grundsätzlich eine bei einem Werkstück durch Abfasen (auch Anfasen, Abkanten) entstandene schmale Fläche anstelle der Kante verstanden. Scharfe Kanten mit geringen Radien werden somit vermieden.

Weiterhin sind die Bohrungen in den Flanschen für die Befestigungsschrauben als Sacklöcher, insbesondere mit achsparalleler Ausrichtung, ausgeführt. Abgedichtet wird der Motor mit den beigelegten Flachdichtungen.

Die Riemenscheibe ist aufgrund des Einsatzgebietes ebenfalls aus einem Material, welches von der EHEDG zugelassen ist (zum Beispiel Edelstahl 1.4404).

Erfindungsgemäß kann somit die Abtriebsseite des Motors - also die A-Seite - vergleichsweise kompakt und günstig realisiert werden und nimmt einen deutlich - vor allem axial - geringeren Bauraum ein. Somit ist z.B. eine direkte und platzsparende Ausgestaltung des Antriebs einer Arbeitsmaschine, wie Pumpe, Verdichter etc. auch in der Lebensmittelindustrie, in der Pharmaindustrie und in der medizinischen Technik beispielsweise über eine Riemenscheibe möglich.

Die Erfindung sowie weitere vorteilhafte Ausgestaltungen der Erfindung sind dem prinzipiell dargestellten Ausführungsbeispiel zu entnehmen, darin zeigt:
- FIG 1: einen prinzipiellen Längsschnitt einer A-Seite eines Motors,
- FIG 2: eine perspektivische Darstellung des Längsschnittes der A-Seite des Motors,
- FIG 3: einen prinzipiellen Längsschnitt einer weiteren Ausgestaltung einer A-Seite eines Motors,
- FIG 4: eine perspektivische Darstellung des Längsschnittes dieser Ausgestaltung der A-Seite des Motors,
- FIG 5: eine EHEDG-konforme Schraubverbindung.

Es sei angemerkt, dass sich Begriffe wie "axial", "radial", "tangential" etc. auf die in der jeweiligen Figur bzw. im jeweils beschriebenen Beispiel zum Einsatz kommende Achse beziehen. Mit anderen Worten beziehen sich die Richtungen axial, radial, tangential stets auf eine Achse eines Motors 1 und damit auf die entsprechende Symmetrieachse des Stators. Dabei beschreibt "axial" eine Richtung parallel zur Achse, "radial" beschreibt eine Richtung orthogonal zur Achse, auf diese zu oder auch von ihr weg, und "tangential" ist eine Richtung, die in konstantem radialem Abstand zur Achse und bei konstanter Axialposition kreisförmig um die Achse herum gerichtet ist. Der Ausdruck "in Umfangsrichtung" oder "umfänglich" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor und Stator des Motors 1, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse 15 ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren, um so keine unnötigen Spalte entstehen zu lassen. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die Figuren zeigen prinzipielle Ausführungen der Erfindung, wobei u.a. die dort zeichnerisch vorhandenen Radien deshalb nicht immer EDHG-konform dargestellt sind.

Die beschriebenen Ausführungen können beliebig kombiniert werden. Ebenso sind auch Einzelmerkmale der jeweiligen Ausführungen kombinierbar, ohne das Wesen der Erfindung zu verlassen.

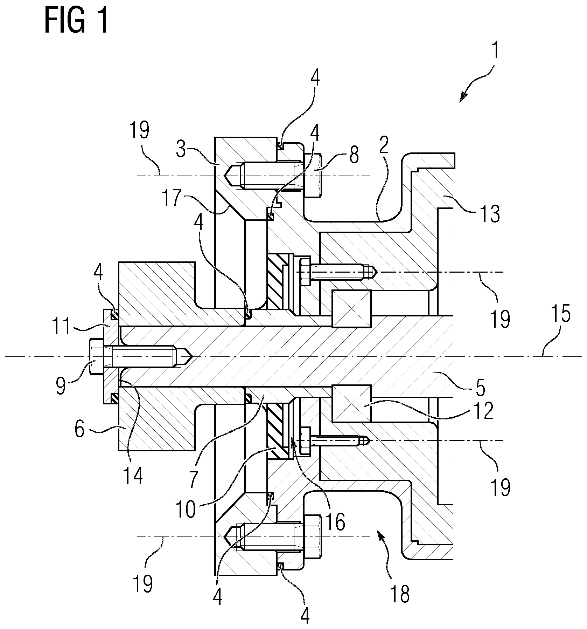

FIG 1 zeigt einen Längsschnitt einer Abtriebsseite (A-Seite) einer dynamolektrischen Maschine, insbesondere eines Motors 1. Bei einer dynamoelektrischen Maschine, wie einem Motor 1 gibt es eine A-Seite, deren eines Wellenende zu Abtriebselementen und/oder einer Arbeitsmaschine (allgemein Wellenanbauelementen) weist und mit diesen mechanisch direkt oder indirekt gekoppelt wird. Die B-Seite des Motors liegt am anderen Wellenende und ist der Arbeitsmaschine abgewandt.

Die dynamoelektrische Maschine ist dabei als Synchronmaschine oder Asynchronmaschine ausgeführt. An der Abtriebsseite der dynamoelektrischen Maschine ist ein Lagerflansch 13 vorgesehen, der Lager 12 aufweist, um eine Welle 5 zu lagern. Umfänglich ist der Lagerflansch 13 zumindest teilweise von einem Übergangsflansch 2 umgeben, der mit diesem über achsparallele Verbindungschrauben verbunden ist. Diese Verbindung ist in einem dafür vorgesehenen axial vertieften Abschnitt - einem Bauraum 16 - des Übergangsflansch 2 vorgesehen. Dieser axial vertiefte Abschnitt ist mittels einer wellenseitig angebrachten Hülse, insbesondere einer Edelstahlhülse 7und einem dazu komplementären, insbesondere EHEDG-konformen Wellendichtring 10 abgedichtet.

Übergangsflansch 2 und Lagerflansch 13 können auch einstückig ausgeführt sein.

An den Übergangsflansch 2 schließt sich axial ein Anbauflansch 3 an, der über Schraubverbindungen mit dem Übergangsflansch 2 verbunden ist. Diese Schraubverbindungen, vor allem deren Schraubköpfe 8 sind über eine umfänglich verlaufende Ausnehmung 18 des Übergangsflansches 2 zugänglich.

Der Anbauflansch 3 kann dabei auch zumindest ein Teil einer kundenseitigen Maschine sein.

Der Anbauflansch 3 weist eine Innenbohrung auf, wobei insbesondere die dem Motor 1 abgewandte Seite angefast ist, um u.a. zusätzlich axial Bauraum bereitzustellen.

Dieser, insbesondere kundenseitige Anbauflansch 3 ist erfindungsgemäß so gestaltet, dass die Reinigung der Flächen der Flansche (auf der dem Motor 1 abgewandten Seite) und/oder der Wellenanbauelemente einfach möglich ist. Deshalb sind eine möglichst große Fase 17 sowie möglichst große Radien an dem Anbauflansch 3 ausgeführt.

Als A-seitiges Wellenanbauelement des Motors 1, wird erfindungsgemäß eine Riemenscheibe 6, eine Kupplung und/oder eine Arbeitsmaschine, z.B. eine Pumpe oder Verdichter verstanden.

Dabei wird als Fase 17 grundsätzlich eine bei einem Werkstück durch Abfasen (auch Anfasen, Abkanten) entstandene schmale Fläche anstelle der Kante verstanden. Scharfe Kanten mit geringen Radien werden somit vermieden.

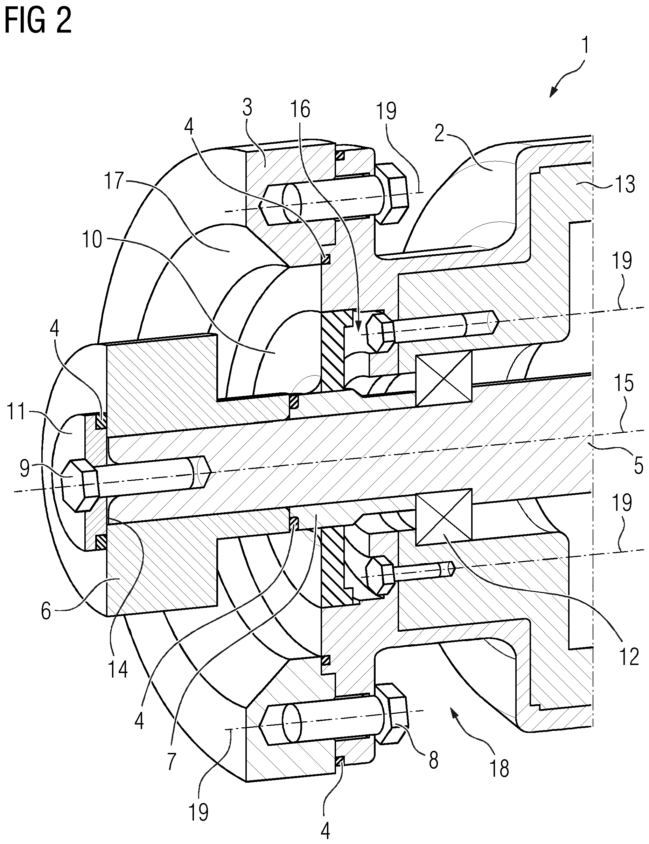

FIG 1 und auch FIG 2 in perspektivischer Darstellung, zeigen dabei weiter eine Abdichtung bei einer Riemenscheibe 6 als Wellenanbauelement. Die EHEDG-konformen Flachdichtungen 4 sind z.B. aus Silikon oder EPDM dichten die Kontaktflächen ab. Weiterhin wird die Wellenbohrung bzw. der Wellenspiegel 14 mit einer EHEDG-konformen Edelstahlschrauben 9 einer Dichtung 4 sowie einer Edelstahlscheibe 11 abgedichtet.

Der EHEDG Wellendichtring 10 aus PTFE (Polytetrafluorethylen) läuft auf der Edelstahlhülse 7 z.B. aus 1.4404 mit einer Rauheit von < Rₐ 0,8.

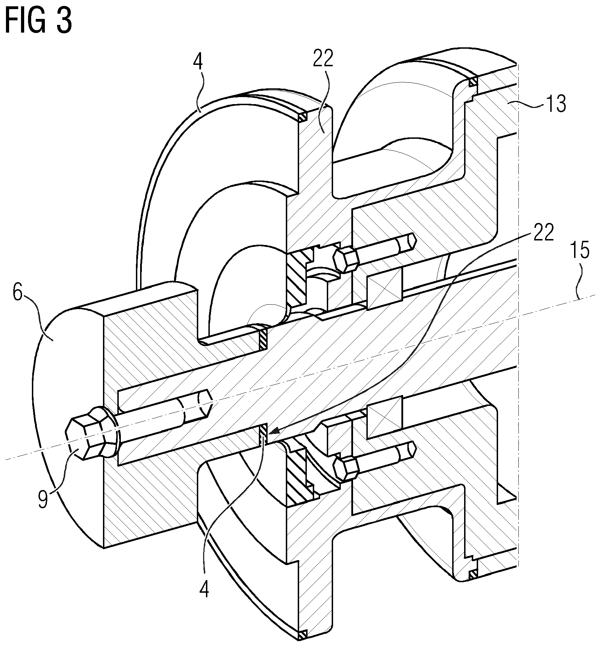

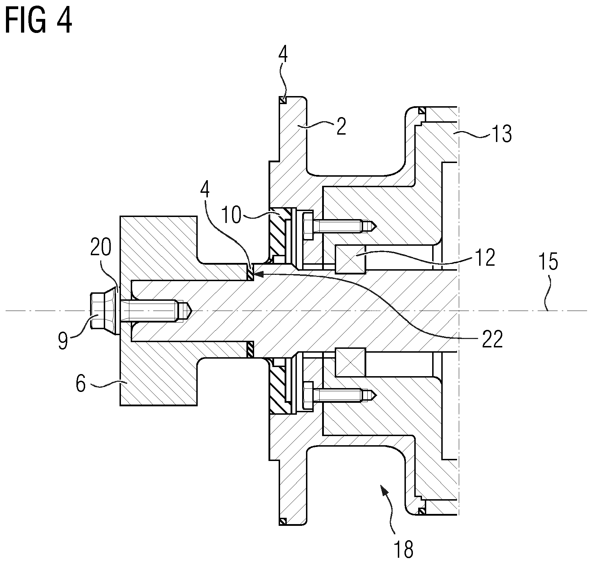

In einer weiteren Ausgestaltung der Erfindung nach FIG 3 und FIG 4 läuft der EHEDG Wellendichtring 10 direkt auf der Welle 5. Es ist somit keine Edelstahlhülse 7 notwendig. Um jedoch die Abtriebsseite des Motors 1 EHEDG-konform ausgestalten zu können, ist ein Wellenabsatz 22 vorgesehen, der als Reduktion des Wellendurchmessers ausgeführt ist. Dieser wird - wie den FIG 3,4 zu entnehmen ist - durch eine Dichtung 4 gegenüber einem Abtriebselement, beispielsweise einer Riemenscheibe 6 abgedichtet. Dieser Wellenabsatz 22 zur Aufnahme einer Dichtung 4 ist axial vom Wellendichtring 10 beabstandet und ist zwischen dem Wellendichtring 10 und einem Abtriebselement vorgesehen.

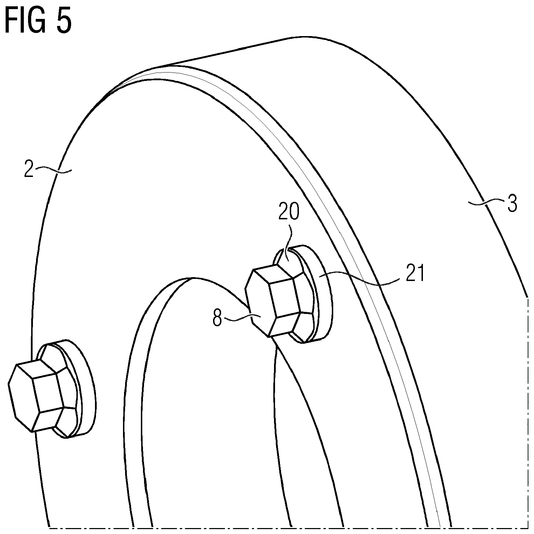

FIG 5 zeigt EHEDG-konforme Edelstahlschrauben 9, mit einem Schraubenkopferweiterung 20 und einer dafür geeigneten Schraubendichtung 21, wie sie an relevanten Verbindungen einzusetzen ist.

Übergangsflansch 2 und Lagerflansch 13 sind in weiteren Ausführungen auch einstückig ausführbar, sie bilden dann einen Motorflansch, an den der insbesondere kundenseitige Anbauflansch 3 über die Schraubverbindungen gemäß FIG 5 befestigbar ist. Schraubverbindungen zwischen Übergangsflansch 2 und Lagerflansch 13 würden danach entfallen.

Die Dichtungen 4, insbesondere Flachdichtungen sind vorzugsweise als EPDM-Dichtungen ausgeführt und sind aus Ethylen-Propylen-Dien-Kautschuk (*E*thylen-*P*ropylen-*D*ien; *M*-Gruppe) mit Terpolymere aus Ethylen, Propylen und einem nicht näher festgelegten Dien.

Die EPDM-Dichtungen werden wegen Ihrer guten chemischen Beständigkeit auch als O-Ringe im Kontakt mit Wasser/Wasserdampf, Kühlflüssigkeiten sowie Säuren und Laugen eingesetzt.

EPDM ist langfristig alterungsbeständig, resistent gegen UV-Strahlung und Ozon, witterungsbeständig, robust, begehbar, thermisch beständig und frostsicher sowie einfach und im Gebäudebereich brandsicher zu verarbeiten.

EPDM gilt dabei als Material, das bei der Herstellung, Verarbeitung und Nutzung nur in geringem Maße belastend auf die Umwelt einwirkt. Es enthält keine flüchtigen Weichmacher oder Schadstoffe, die über die Nutzungsdauer freigesetzt werden können. Das Material kann wiederaufbereitet und z.B. für Bodenbeläge eingesetzt oder sogar verbrannt werden.

Weiterhin sind die Bohrungen für die Befestigungsschrauben des Motors 1 und/oder des Anbauflansches 3 als Sacklöcher ausgeführt sein. Weiter abgedichtet wird der Motor 1 mit Flachdichtungen 4.

Vorzugsweise sind die Achsen 19 der Schraubverbindungen zwischen Anbauflansch 3 und Übergangsflansch 2 und/oder zwischen Lagerflansch 13 und Übergangsflansch 2 parallel zur Achse 15 ausgerichtet, was u.a. die Montage dieser Anordnung vereinfacht.

Die Riemenscheibe 6 ist ebenfalls aus einem Material, welches von der EHEDG zugelassen ist, zum Beispiel Edelstahl 1.4404 (X2CrNiMo17-12-2). Es handelt sich dabei um einen austenitischen, rostfreien Stahl. Aufgrund des niedrigeren Kohlenstoffgehalts ist dieser leichter spanend zu bearbeiten als der ansonsten gleichwertige Edelstahl 1.4401.

Der Anbau von Arbeitsmaschinen auf die Abtriebsseite des Motors 1, insbesondere in der Lebensmitteltechnik ist damit kompakter und vielfältiger, dadurch dass nunmehr Arbeitsmaschinen mit Riemenscheibe 6 und/oder über eine Kupplung und/oder über ein Zahnrad oder auch direkt angetrieben werden können.

Damit ergibt sich bei einem vergleichsweise geringen Bauraum eine größere Antriebsvarianz.

Bisher musste diese Abtriebsseite mittels eine aufwändigen Kupplungslaterne abgedeckt werden. Dies bedeutete, dass diese Kupplungslaterne ebenfalls aus Edelstahl z.B. 1.4404 bestehen musste und eine Rauheit von Ra 0,8 nicht überschreiten durfte. Des Weiteren nahm ein solcher Anbau relativ viel axialen Bauraum ein. Diese aufwändige Konstruktion verteuerte einen derartigen Einsatz in der Lebensmittelindustrie.

Erfindungsgemäß kann somit die Abtriebsseite des Motors 1 kompakter und günstiger realisiert werden und nimmt einen deutlich - vor allem axial - geringeren Bauraum ein. Somit ist z.B. eine direkte und platzsparende Ausgestaltung des Antriebs einer Arbeitsmaschine, wie Pumpe, Verdichter etc. auch in der Lebensmittelindustrie über eine Riemenscheibe 6 möglich.

Durch diese erfindungsgemäße Ausgestaltung der Abtriebsseite des Motors 1 kann nunmehr in kompakter und einfacher Art und Weise EHEDG-konform z.B. eine Riemenscheibe 6 oder ein Zahnrad verbaut werden.

### Bezugszeichenliste

- 1: Motor
- 2: Übergangsflansch
- 3: Anbauflansch
- 4: Dichtung
- 5: Welle
- 6: Riemenscheibe
- 7: Edelstahlhülse
- 8: Schraubköpfe
- 9: Edelstahlschraube
- 10: Wellendichtring
- 11: Edelstahlscheibe
- 12: Lager
- 13: Lagerflansch
- 14: Wellenspiegel
- 15: Achse
- 16: Bauraum
- 17: Fase
- 18: Ausnehmung
- 19: Achsen der Schraubverbindungen
- 20: Schraubenkopferweiterung
- 21: Schraubendichtung
- 22: Wellenabsatz

## Patentansprüche

1. Ausgestaltung einer Abtriebsseite (A-Seite) einer dynamoelektrischen Maschine (1) in der sterilen Verfahrenstechnik, insbesondere in der Lebensmittelindustrie mit zumindest einer dynamoelektrischen Maschine (1) und zumindest eines über eine Welle (5) der dynamoelektrischen Maschine (1) angetriebenen Abtriebselements auf der A-Seite der dynamoelektrischen Maschine (1),
wobei die Welle (5) um eine Achse (15) rotiert und in Lagern (12) gehalten ist,
wobei die A-Seite der dynamoelektrischen Maschine (1) zumindest einen Lagerflansch (13) und einen daran befestigten Übergangsflansch (2) aufweist, die in einem achsnahen Bauraum mittels Schraubverbindungen verbunden sind, wobei der Bauraum (16) zumindest mittels einer Hülse (7) und einem Wellendichtring (10) abgeschlossen ist,
wobei ein Anbauflansch (3) über Schraubverbindungen mit dem Übergangsflansch (2) verbunden ist, wobei die Schraubköpfe (8) dieser Schraubverbindungen zur dynamoelektrischen Maschine (1) weisen,
wobei am Endbereich der Welle (5) auf der A-Seite der dynamoelektrischen Maschine (1) das Abtriebselement gekoppelt ist.

2. Ausgestaltung einer Abtriebsseite (A-Seite) einer dynamoelektrischen Maschine (1) in der sterilen Verfahrenstechnik, insbesondere in der Lebensmittelindustrie mit zumindest einer dynamoelektrischen Maschine (1) und zumindest eines über eine Welle (5) der dynamoelektrischen Maschine (1) angetriebenen Abtriebselements auf der A-Seite der dynamoelektrischen Maschine (1),
wobei die Welle (5) um eine Achse (15) rotiert und in Lagern (12) gehalten ist,
wobei die A-Seite der dynamoelektrischen Maschine (1) zumindest einen Lagerflansch (13) und einen daran befestigten Übergangsflansch (2) aufweist, die in einem achsnahen Bauraum mittels Schraubverbindungen verbunden sind, wobei der Bauraum (16) mittels einem Wellendichtring (10) abgeschlossen ist,
wobei ein Anbauflansch (3) über Schraubverbindungen mit dem Übergangsflansch (2) verbunden ist, wobei die Schraubköpfe (8) dieser Schraubverbindungen zur dynamoelektrischen Maschine (1) weisen,
wobei am Endbereich der Welle (5) auf der A-Seite der dynamoelektrischen Maschine (1) das Abtriebselement gekoppelt ist.

3. Ausgestaltung einer Abtriebsseite (A-Seite) einer dynamoelektrischen Maschine nach Anspruch 1 oder 2, **dadurch gekennzeichnet, dass** Lagerflansch (13) und Übergangsflansch (2) einstückig ausgeführt sind.

4. Ausgestaltung einer Abtriebsseite (A-Seite) einer dynamoelektrischen Maschine nach einem der Ansprüche 1 bis 3, **dadurch gekennzeichnet, dass** der Anbauflansch (3), insbesondere auf der der dynamoelektrischen Maschine (1) abgewandten Seite vergleichsweise große Radien und/oder vergleichsweise große Fasen (17) aufweist.

5. Ausgestaltung einer Abtriebsseite (A-Seite) einer dynamoelektrischen Maschine nach einem der Ansprüche 1 bis 4, **dadurch gekennzeichnet, dass** das Abtriebselement auf der A-Seite der dynamoelektrischen Maschine als Antriebsadapter, wie eine Riemenscheibe (6) oder eine Kupplung oder ein Zahnrad ausgebildet ist und darüber zumindest eine Arbeitsmaschine antreibt.

6. Ausgestaltung einer Abtriebsseite (A-Seite) einer dynamoelektrischen Maschine (1) nach nach einem der Ansprüche 1 bis 4, **dadurch gekennzeichnet, dass** auf der Abtriebsseite (A-Seite) der dynamoelektrischen Maschine eine Arbeitsmaschine direkt mit der Welle (5) gekoppelt ist.

7. Ausgestaltung einer Abtriebsseite (A-Seite) einer dynamoelektrischen Maschine (1) nach einem der vorhergehenden Ansprüche, **dadurch gekennzeichnet, dass** die Achsen der Schraubverbindungen zwischen Lagerflansch (13) und Übergangsflansch (2) und/oder Anbauflansch (3) und Übergangsflansch (2) achsparallel verlaufen.

8. Ausgestaltung einer Abtriebsseite (A-Seite) einer dynamoelektrischen Maschine (1) nach einem der vorhergehenden Ansprüche , **dadurch gekennzeichnet, dass** das Abtriebselement an dem Endbereich der Welle (5) mittels einer Schraube, einer Edelstahlscheibe und einer Flachdichtung (4) am Wellenspiegel (14) gehalten ist.

9. Ausgestaltung einer Abtriebsseite (A-Seite) einer dynamoelektrischen Maschine (1) nach einem der vorhergehenden Ansprüche, **dadurch gekennzeichnet, dass** zumindest die auf der Abtriebsseite (A-Seite) vorgesehenen Abdichtungen, wie Flachdichtungen (4) EHEDG-konform ausgeführt sind.
